Europäisches Patentamt

(19) European Patent Office

Office européen des brevets

(11) Veröffentlichungsnummer: **0 037 007**
**B1**

(12) # EUROPÄISCHE PATENTSCHRIFT

(45) Veröffentlichungstag der Patentschrift:
29.06.83

(51) Int. Cl.³: **G 02 B 7/26**

(21) Anmeldenummer: **81101989.2**

(22) Anmeldetag: **17.03.81**

(54) **Verfahren zur Herstellung eines optischen 4-Tor-Kopplers.**

(30) Priorität: **21.03.80 DE 3010971**

(43) Veröffentlichungstag der Anmeldung:
**07.10.81 Patentblatt 81/40**

(45) Bekanntmachung des Hinweises auf die Patenterteilung:
**29.06.83 Patentblatt 83/26**

(84) Benannte Vertragsstaaten:
**FR GB NL**

(56) Entgegenhaltungen:
**GB-A-1 569 752**

**IEEE JOURNAL OF QUANTUM ELECTRONICS, Band 15, Nr. 9, September 1979, New York, U.S.A., T. OHIRA et al.: «Mass-producible plastic planar coupler for multimode fiber systems» Seiten 81D-82D L'ONDE ELECTRIQUE, Band 56, Nr. 12 bis, 1976, H.H. WITTE: «New optical planar coupler in a data bus system with single multimode fibers» Seiten 607-608**

(73) Patentinhaber: **SIEMENS AKTIENGESELLSCHAFT, Berlin und München Wittelsbacherplatz 2, D-8000 München 2 (DE)**

(72) Erfinder: **Kulich, Vaclav, Marbachstrasse 8a, D-8000 München 70 (DE)**
Erfinder: **Michel, Herbert, Bacherstrasse 49, D-8000 München 90 (DE)**
Erfinder: **Witte, Hans-Hermann, Dr., Hippelstrasse 15, D-8000 München 82 (DE)**

## Verfahren zur Herstellung eines optischen 4-Tor-Kopplers

Die Erfindung betrifft ein Verfahren zur Herstellung eines optischen 4-Tor-Kopplers mit einer ankommenden, einer weiterführenden, einer einkoppelnden und einer auskoppelnden Multimode-Lichtleitfaser, bei dem die planen Stirnflächen der vier mit ihren Achsen in einer Ebene liegenden Fasern achsversetzt aneinanderstossen und die Querschnittsfläche der einkoppelnden Fasern kleiner ist als die der übrigen Fasern.

Bei dem optischen 4-Tor-Koppler nach der DE-A-29 38 526 sind die Einkoppelverluste gegenüber bekannten Kopplern mit vier gleich dicken Lichtleitfasern wesentlich herabgesetzt. Darüber hinaus lässt sich der Ein- und der Auskoppelgrad bei dem 4-Tor-Koppler nach DE-A-29 38 526 weitgehend unabhängig voneinander einstellen. Es sind auch bereits einige praktische Ausführungsformen dieses 4-Tor-Kopplers angegeben.

Der vorliegenden Erfindung liegt die Aufgabe zugrunde, möglichst einfache Verfahren zur Herstellung eines 4-Tor-Kopplers der eingangs genannten Art anzugeben, die sich insbesondere für eine kostengünstige Serienproduktion bis auf den Ein- bzw. Auskoppelgrad identischer 4-Tor-Koppler eignen.

Diese Aufgabe wird erfindungsgemäss durch die im kennzeichnenden Teil des Anspruchs 1 angegebenen Verfahrensschritte gelöst. Dort wird als Träger für den 4-Tor-Koppler ein Substrat, beispielsweise aus Glas, verwendet, auf dem zunächst gegen einen Anschlag das Faserende einer dicken Faser und eine durchgehende dicke Faser gelegt werden. Der Anschlag kann dabei aus einem aufgeklebten Plättchen bestehen. An diese beiden Fasern schliesst sich in einem Führungsteil das Faserende einer dünnen Faser an. Durch das Führungsteil wird die dünne Faser so weit von der Substratoberfläche abgehoben, dass die Achsen aller Fasern in einer Ebene liegen. Alle Fasern werden in dieser Lage beispielsweise durch einen optischen Kleber fixiert. Der so gebildete Körper wird quer zu den Faserachsen aufgetrennt. Die beiden Trennflächen werden planpoliert und anschliessend versetzt wieder miteinander verbunden. Je nach der Grösse des eingestellten Versatzes ergibt sich ein unterschiedlicher Ein- bzw. Auskoppelgrad. Bei dem fertigen 4-Tor-Koppler hat in jeder Hälfte eine Faser keine optische Funktion.

In Weiterbildung der Erfindung ist zur gleichzeitigen Herstellung einer Vielzahl gleicher Führungsteile für die dünne Faser vorgesehen, dass zunächst in einem Plättchen Führungsgräben zur Aufnahme der dünnen Fasern erzeugt werden. Diese Führungsgräben können fotolithografisch über eine geeignete Maske hergestellt werden. Anschliessend wird das Plättchen parallel zu den Führungsgräben aufgetrennt. In einem letzten Schritt werden die Trennflächen so weit heruntergeschliffen, dass der Abstand der Mitte der Führungsgräben von der Schleifkante dem Radius der dicken Fasern entspricht. Durch Zerschneiden dieser Teile quer zu den Führungsgräben kann eine Vielzahl gleicher Führungsteile erzeugt werden.

Zur Herstellung gleicher Führungsteile ist es ebenso vorteilhaft, aus einem Plättchen zunächst einige Millimeter breite Streifen herauszuschneiden und die Schnittflächen plan zu schleifen. Der Schleifvorgang kann dabei für alle Streifen gemeinsam vorgenommen werden. Die so erzeugten Kanten dienen als Bezugskanten für einen nachfolgenden fotolithografischen Prozess. Ein Streifen wird an eine Anschlagkante gelegt, dann werden über eine Maske ein oder zwei Führungsgräben für dünne Fasern in dem gewünschten Abstand von der Kante erzeugt. Die Streifen können anschliessend wieder quer zu den Führungsgräben aufgetrennt werden und ergeben wiederum eine Vielzahl gleicher Führungsteile.

Das Plättchen für die Führungsteile kann aus Silizium oder aber auch aus lichtempfindlichem Material, beispielsweise Kunststoff, bestehen. Zur Erhöhung der mechanischen Stabilität kann das Plättchen auf einem Substrat aufliegen und mit diesem fest verbunden sein.

Die im kennzeichnenden Teil des Anspruchs 7 angegebenen Verfahrensschritte stellen eine weitere Lösung der gennanten Aufgabe zur Herstellung eines optischen 4-Tor-Kopplers dar. Dazu werden zunächst in einer Platte eine oder auch gleichzeitig mehrere Nuten erzeugt, deren Breite annähernd dem Durchmesser der dicken Fasern und deren Tiefe etwa zweimal dem Durchmesser der dicken und einmal dem Durchmesser der dünnen Faser entspricht. In diese Nuten werden zunächst mehrere dünne Fasern und anschliessend zwei dicke Fasern eingelegt. Durch Verwenden mehrerer dünner Fasern wird hierbei erreicht, dass zumindest eine dünne Faser möglichst gut auf die dicken Fasern ausgerichtet ist, d.h. dass die Achse dieser dünnen Faser mit den Achsen der beiden dicken Fasern annähernd in einer Ebene liegt. Die Fasern werden über ein Andrückplättchen auf innigen Kontakt gebracht und in dieser Lage fixiert, beispielsweise mit einem optischen Kleber. Anschliessend wird die Platte mit den Fasern quer zu den Faserachsen aufgetrennt, die beiden Stirnflächen planpoliert und anschliessend wieder versetzt miteinander verbunden. Die Platte, in der die Nuten für die Fasern erzeugt werden, kann beispielsweise aus Glas bestehen. Es kann sich ebenso um ein auf ein Substrat aufgeklebtes Siliziumplättchen handeln. Weiterhin ist auch möglich, dass die Platte aus lichtempfindlichem Material besteht und die Nuten fotolithografisch erzeugt werden.

In einer vorteilhaften Weiterbildung des erfindungsgemässen Verfahrens ist vorgesehen, dass die den beiden mit Versatz verbundenen Stirnflächen abgewandten Faserenden auf dem Substrat in Führungsnuten in definiertem Abstand fixiert sind. Durch Auftrennen der Platte parallel zu den Nuten für die Fasern ergibt sich wiederum eine Vielzahl gleicher 4-Tor-Koppler, die mechanisch stabil sind und bei denen an die freien Stirnflächen der im Koppler optisch wirksamen Fasern in bekannter Art die Systemfasern angeflanscht werden können.

Die Erfindung wird im folgenden anhand der in sieben Figuren dargestellten Ausführungsbeispiele näher beschrieben und erläutert. Gleiche Teile sind in allen Figuren mit gleichen Bezugszeichen versehen.

Dabei zeigt

Fig. 1 in Draufsicht einen Ausgangskörper mit eingelegten Lichtleitfasern;

Fig. 2 in Seitenansicht einen Schnitt entlang der Linie II-II der Fig. 1;

Fig. 3 bis 5 zeigen unterschiedliche Wege, wie die Führungsteile für die dünnen Fasern hergestellt werden können;

Fig. 6 zeigt in perspektivischer Darstellung eine andere Form eines Ausgangskörpers für den 4-Tor-Koppler;

Fig. 7 zeigt einen vergrösserten Ausschnitt aus dem Körper nach Fig. 6 mit eingelegten Lichtleitfasern.

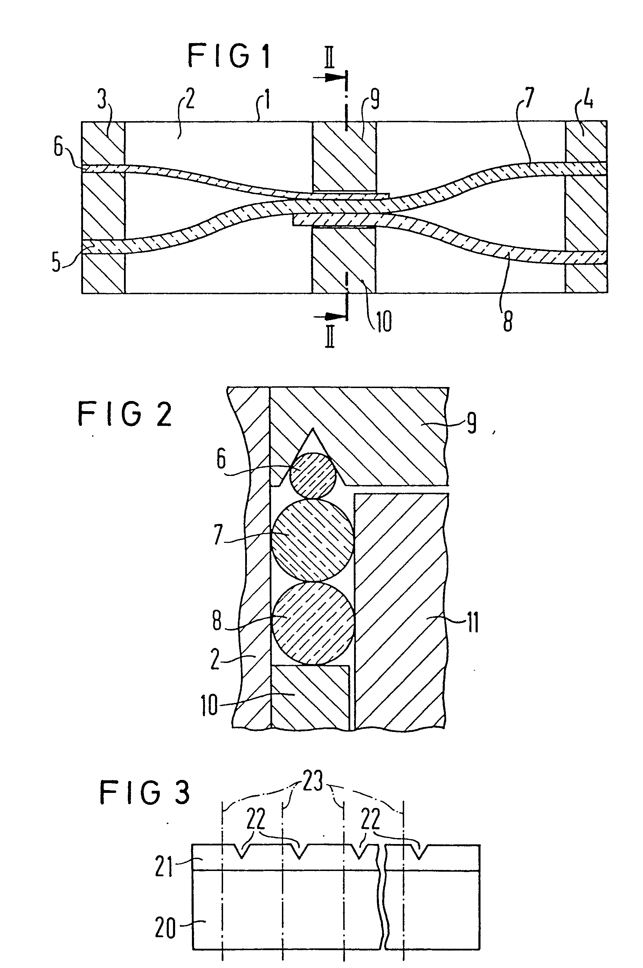

Der Ausgangskörper 1 in der Fig. 1 besteht aus einem Substrat 2, beispielsweise Glas, auf dem sich an beiden Enden je ein Plättchen 3 bzw. 4 mit Führungsnuten zur Fixierung der Lichtleitfasern 5, 6 bzw. 7, 8 in einem bestimmten Abstand befinden. In der Mitte des Ausgangskörpers 1 ist ein Führungsteil 9 zur Aufnahme der dünnen Lichtleitfaser 6 auf das Substrat 2 aufgeklebt. An die so fixierte dünne Faser 6 schliessen sich eine durchgehende Faser mit den Faserenden 5 bzw. 7 und das Faserende 8 an. Über einen Anschlag 10, der gleichzeitig als Andrückplättchen dient, werden die dicken Fasern 5, 7 bzw. 8 an die dünne Faser 6 herangedrückt. Zur vollständigen Fixierung der Fasern können auf die Plättchen 3 bzw. 4 und auf den Anschlag 10 und die beiden dicken Fasern 5, 7 und 8 Deckel aufgebracht werden. Die Anordnung wird mit Kleber fixiert und kann anschliessend entlang der Linie II-II aufgetrennt werden. Die beiden Schnittflächen werden anschliessend planpoliert und können schliesslich mit dem gewünschten Versatz gegeneinander wieder zu dem fertigen 4-Tor-Koppler verbunden, beispielsweise verklebt, werden. In den beiden Hälften des Kopplers hat je eine Faser keine optische Funktion.

In der Fig. 2 ist unmassstäblich ein Schnitt entlang der Linie II-II dargestellt. Wie man aus dieser Figur deutlich ersehen kann, sind durch Verwenden des Führungsteiles 9 sowie den Anschlag 10 und den Deckel 11 die drei Fasern 6 bis 8 derart fixiert, dass ihre Achsen in einer Ebene liegen.

Fig. 3 zeigt eine mögliche Herstellungsart der Führungsteile 9. Zunächst ist auf einem Substrat 20 ein Siliziumplättchen 21 aufgebracht. Fotolithografisch werden in das Siliziumplättchen über eine geeignete Maske Führungsgräben 22 zur Aufnahme der dünnen Fasern hergestellt. Anschliessend werden das Siliziumplättchen und das Substrat gemeinsam entlang den Schnittlinien 23 aufgetrennt, wobei die Trennlinien je nach Faserdicke grössenordnungsmässig 1 mm vom Zentrum der Führungsgräben 22 entfernt sein sollten. Anschliessend wird durch Schleifen der gewünschte Abstand vom Grabenzentrum zu einer Kante eingestellt. Dieser Abstand muss — wie bei dem Führungsteil 9 nach der Fig. 2 ersichtlich ist — dem Radius der dicken Fasern entsprechen.

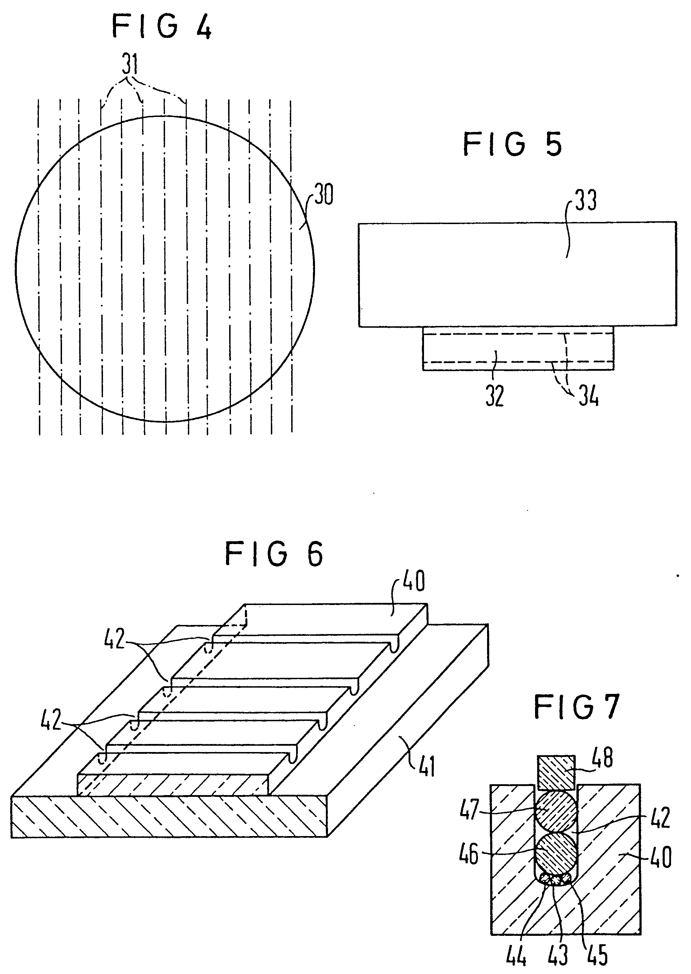

Im Hinblick auf eine Serienfertigung dieser Führungsteile kann man auch nach einem etwas abgewandelten Verfahren vorgehen: Eine runde Siliziumscheibe 30 wird auf einem Substrat, z.B. Glas (in der Draufsicht der Fig. 4 nicht dargestellt), aufgebracht. Dann werden daraus etwa 5 mm breite Streifen herausgeschnitten, beispielsweise durch Sägen. In der Fig. 4 sind diese Streifen durch die gestrichelten Linien 31 angedeutet. In einem gemeinsamen Bearbeitungsschritt können diese Streifen übereinandergelegt und geschliffen werden, so dass jeder Streifen zwei parallele plane Seitenflächen besitzt. Ein solcher Streifen 32 ist beispielhaft in Fig. 5 dargestellt. Die planen Seitenflächen dienen als Bezugsflächen für einen nachfolgenden fotolithografischen Prozess zum Erzeugen der Führungsgräben. Der Streifen 32 ist dazu mit einer Seitenfläche an einen Anschlag 33 gelegt. Über eine hier nicht dargestellte Maske werden fotolithografisch zwei Führungsgräben 34 für dünne Fasern erzeugt. In der Fig. 5 sind diese Führungsgräben schematisch nur als gestrichelte Linien dargestellt. Der Abstand der beiden Führungsgräben 34 von der jeweils benachbarten planen Seitenfläche entspricht dem Radius der dicken Fasern.

Jeder so mit zwei Führungsgräben versehene Streifen 32 kann nun entlang ungefähr in seiner Mitte aufgesägt werden. Man erhält dadurch zwei Plättchen, bei denen jeweils der Führungsgraben um den gewünschten Abstand von einer Seitenfläche angeordnet ist. Durch Zersägen jedes Plättchens quer zum Führungsgraben lassen sich entsprechend viele Führungsteile für die dünne Faser erzeugen. Abweichend von den gemäss der Fig. 3 bis 5 hergestellten Führungsteilen kann anstelle des Siliziums auch lichtempfindliches Material verwendet werden.

Anhand der Fig. 6 und 7 wird ein anderes erfindungsgemässes Verfahren zur einfachen Herstellung des 4-Tor-Kopplers beschrieben. Ausgangskörper ist dabei beispielsweise eine Glasplatte 40, die auf ein Substrat 41 aufgeklebt ist. In diese Glasplatte 40 werden parallel zueinander eine Reihe geeignet tiefer Nuten 42 gesägt. Die Tiefe sollte dabei zweimal dem Durchmesser der dicken und einmal dem Durchmesser der dünnen Faser entsprechen. Die Nutenbreite soll möglichst gleich dem Durchmesser der dicken Fasern sein.

In Fig. 7 ist unmassstäblich vergrössert ein Ausschnitt aus Fig. 6 mit eingelegten Fasern dargestellt. In die Nut 42 der Glasplatte 40 werden zusätzlich zu derjenigen dünnen Faser 43, die als Einkoppelfaser verwendet wird, weitere dünne Fasern 44, 45 eingelegt, damit die dünne Faser 43 möglichst gut auf die folgenden dicken Fasern 46 bzw. 47 ausgerichtet ist. Die Fasern 43 bis 47 werden über ein Andrückplättchen 48 auf innigen Kontakt gebracht und über einen Kleber fixiert. Die weiteren Verfahrensschritte zur Herstellung des optischen 4-Tor-Kopplers entsprechen den bereits anhand der Fig. 1 beschriebenen.

10 Patentansprüche
7 Figuren

## Patentansprüche

1. Verfahren zur Herstellung eines optischen 4-Tor-Kopplers mit einer ankommenden, einer weiterführenden, einer einkoppelnden und einer auskoppelnden Multimode-Lichtleitfaser, bei dem die planen Stirnflächen der vier mit ihren Achsen in einer Ebene liegenden Fasern achsversetzt aneinanderstossen und die Querschnittsfläche der einkoppelnden Faser kleiner ist als die der übrigen Fasern, dadurch gekennzeichnet, dass auf ein Substrat (2) gegen einen Anschlag (10) ein Faserende (8) und eine durchgehende Faser (5, 7) gleicher Querschnittsfläche gelegt werden, dass an diese Fasern (8 und 5, 7) das Faserende einer Faser (6) kleinerer Querschnittsfläche in einem Führungsteil (9) herangeführt und alle Fasern in dieser Lage fixiert werden, dass der so gebildete Ausgangskörper (1) quer zu den Faserachsen aufgetrennt wird, die beiden Stirnflächen planpoliert und mit dem geforderten Versatz wieder miteinander verbunden werden.

2. Verfahren nach Anspruch 1, dadurch gekennzeichnet, dass zur Herstellung des Führungsteiles in einem Plättchen (21) Führungsgräben (22) zur Aufnahme der dünnen Fasern erzeugt werden, dass das Plättchen (21) parallel zu den Führungsgräben (22) in einem Abstand von der Mitte dieser Gräben, der etwas grösser als der Radius der dicken Fasern ist, aufgetrennt wird und dass durch Schleifen der Abstand der Mitte der Gräben (22) von der Schleiffläche auf den Radius der dicken Fasern eingestellt wird.

3. Verfahren nach Anspruch 1, dadurch gekennzeichnet, dass zur Herstellung des Führungsteiles aus einem Plättchen (30) einige Millimeter breite Streifen (32) herausgeschnitten und die Schnittflächen plangeschliffen werden, dass ein so gebildeter Streifen (32) gegen einen Anschlag (33) gelegt wird, dass über eine Maske fotolithografisch ein oder zwei Führungsgräben (34) für dünne Fasern erzeugt werden und dass die Streifen anschliessend quer zu den Gräben in eine Vielzahl gleicher Führungsteile aufgetrennt werden.

4. Verfahren nach Anspruch 2 oder 3, dadurch gekennzeichnet, dass das Plättchen (21, 20) aus Silizium besteht.

5. Verfahren nach Anspruch 2 oder 3, dadurch gekennzeichnet, dass das Plättchen aus lichtempfindlichem Material besteht.

6. Verfahren nach einem der Ansprüche 2 bis 5, dadurch gekennzeichnet, dass das Plättchen (21, 30) auf einem Substrat (20) aufliegt und mit diesem fest verbunden ist.

7. Verfahren nach einem der Ansprüche 1 bis 6, dadurch gekennzeichnet, dass die den beiden mit Versatz verbundenen Stirnflächen abgewandten Faserenden auf dem Substrat (2) in Führungsnuten in definiertem Abstand fixiert sind.

8. Verfahren nach einem der Ansprüche 1 bis 6, dadurch gekennzeichnet, dass ein Deckel (11) zur vollständigen Fixierung auf zwei an den Enden des Substrats (2) angeordnete Plättchen (3, 4), auf den Anschlag (10) und auf die dicken Fasern (5, 7, 8) aufgebracht wird.

9. Verfahren zur Herstellung eines optischen 4-Tor-Kopplers mit einer ankommenden, einer weiterführenden, einer einkoppelnden und einer auskoppelnden Multimode-Lichtleitfaser, bei dem die planen Stirnflächen der vier mit ihren Achsen in einer Ebene liegenden Fasern achsversetzt aneinanderstossen und die Querschnittsfläche der einkoppelnden Faser kleiner ist als die der übrigen Fasern, dadurch gekennzeichnet, dass in einer Platte (40) mindestens eine Nut (42) erzeugt wird, deren Breite annähernd dem Durchmesser der dicken Fasern und deren Tiefe etwa zweimal dem Durchmesser der dicken und einmal dem Durchmesser der dünnen Fasern entspricht, dass in diese Nut (42) zunächst mehrere dünne Fasern (43 bis 45) und anschliessend zwei dicke Fasern (46 und 47) eingelegt und über ein Andrückplättchen (48) auf innigen Kontakt gebracht und in dieser Lage fixiert werden, dass die Platte (40) quer zu den Fasern (43 bis 47) aufgetrennt, die beiden Stirnflächen planpoliert und mit dem geforderten Achsversatz wieder miteinander verbunden werden.

10. Verfahren nach Anspruch 9, dadurch gekennzeichnet, dass die Platte (40) aus Glas besteht.

11. Verfahren nach Anspruch 9, dadurch gekennzeichnet, dass die Platte aus lichtempfindlichem Material besteht und die Nuten fotolithografisch erzeugt werden.

12. Optischer 4-Tor-Koppler mit einer ankommenden, einer weiterführenden, einer einkoppelnden und einer auskoppelnden Multimode-Lichtleitfaser, bei dem die planen Stirnflächen der vier mit ihren Achsen in einer Ebene liegenden Fasern achsversetzt aneinanderstossen und die Querschnittsfläche der einkoppelnden Faser kleiner ist als die der übrigen Fasern, hergestellt nach dem Verfahren gemäss Patentanspruch 1, dadurch gekennzeichnet, dass die Lichtleitfasern auf einem Substrat nebeneinander und einander berührend aufliegen, wobei die aussenliegenden dicken Fasern an Anschlägen anliegen und die aussenliegende dünne Faser (6) in einem Führungsteil (9) fixiert ist.

13. Optischer 4-Tor-Koppler nach Anspruch 12, dadurch gekennzeichnet, dass das Substrat aus Glas ist.

14. Optischer 4-Tor-Koppler nach Anspruch 12 oder 13, dadurch gekennzeichnet, dass das Führungsteil (9) selbst aus einem Substrat (20) und einem mit dem Substrat (20) verbundenen Material (21) mit Führungsgraben (22) besteht.

15. Optischer 4-Tor-Koppler nach Anspruch 14, dadurch gekennzeichnet, dass das Substrat (20) des Führungsteils (9) aus Glas besteht.

16. Optischer 4-Tor-Koppler nach Anspruch 14 oder 15, dadurch gekennzeichnet, dass das mit dem Substrat (20) verbundene Material (21) des Führungsteils (9) aus Silizium oder lichtempfindlichem Material, insbesondere lichtempfindlichem Kunststoff, besteht.

17. Optischer 4-Tor-Koppler nach einem der Ansprüche 12 bis 16, dadurch gekennzeichnet, dass zur vollständigen Fixierung ein Deckel (11) auf den dicken Fasern (5, 7, 8) und auf den Anschlägen (10) aufliegt.

18. Optischer 4-Tor-Koppler mit einer ankommenden, einer weiterführenden, einer einkoppelnden und einer auskoppelnden Multimode-Lichtleitfaser, bei dem die planen Stirnflächen der vier mit ihren Achsen in einer Ebene liegenden Fasern achsversetzt aneinanderstossen und die Querschnittsfläche der einkoppelnden Faser kleiner ist als die der übrigen Fasern, hergestellt nach dem Verfahren gemäss Patentanspruch 7, dadurch gekennzeichnet, dass in einer Platte (40) eine Nut (42) ausgebildet ist, dass dünne und dicke Fasern in diese Nuten (42) eingelegt sind und ein Andrückplättchen (48) die in der Nut (42) befindlichen Fasern fixiert.

19. Optischer 4-Tor-Koppler nach Anspruch 18, dadurch gekennzeichnet, dass das Material der Platte (40) aus Glas, Silizium oder lichtempfindlichem Material, insbesondere lichtempfindlichem Kunststoff, besteht.

20. Optischer 4-Tor-Koppler nach Anspruch 18 oder 19, dadurch gekennzeichnet, dass die Platte (40) mit einem Substrat (41) verbunden ist.

21. Optischer 4-Tor-Koppler nach einem der Ansprüche 12 bis 20, dadurch gekennzeichnet, dass die den beiden mit Versatz verbundenen Stirnflächen abgewandten Faserenden in Führungsnuten in definiertem Abstand fixiert sind.

## Claims

1. A process for the production of a 4-gate optical coupler comprising an incoming, an ongoing, an input-coupling, and an output-coupling multi-mode, lightconducting fibre, in which the flat end faces of the four fibres, the axes of which lie in one plane, are pressed together so that their axes are offset, and in which the cross-sectional area of the input-coupling fibre is smaller than those of the other fibres, characterised in that a fibre end (8) and a throughpassing fibre (5, 7) of the same cross-sectional area are positioned on a substrate (2) against a stop (10); that the end of a fibre (6) having a smaller cross-sectional area is led alongside the fibres (8 and 5, 7) in a guide member (9) and all the fibres are fixed in this position; that the initial body (1) so formed is divided transversely to the fibre axes, and the two end surfaces polished flat and reconnected with the requisite offset.

2. A process as claimed in Claim 1, characterised in that to produce the guide member, guide trenches (22) to receive the thin fibres are produced in a lamella (21); that the lamella (21) is divided up parallel to the guide trenches (22) at a distance from the centre of these trenches which is somewhat greater than the radius of the thick fibres; and that, by grinding, the distance from the centre of the trenches (22) to the ground surface is set to the radius of the thick fibres.

3. A process as claimed in Claim 1, characterised in that to produce the guide member, strips (32) of a few millimetres width are cut from a lamella (30), and the cut surfaces are ground flat; that a strip (32) so formed is positioned against a stop (33); that by means of a mask, one or two guide trenches (34) for thin fibres are produced photolithographically; and that subsequently, the strips are divided, transversely to the trenches, into a plurality of similar guide members.

4. A process as claimed in Claim 2 or Claim 3, characterised in that the lamella (21, 20) consists of silicon.

5. A process as claimed in Claim 2 or Claim 3, characterised in that the lamella consists of lightsensitive material.

6. A process as claimed in one of Claims 2 to 5, characterised in that the lamella (21, 30) rests on a substrate (20) and is fixed thereto.

7. A process as claimed in one of Claims 1 to 6, characterised in that the fibre ends remote from the two end surfaces which are connected with an offset, are fixed on the substrate (2) in guide grooves at a predetermined spacing.

8. A process as claimed in one of Claims 1 to 6, characterised in that for complete fixing, a cover (11) is placed on two lamellae (3, 4) which are arranged at the ends of the substrate (2), on the stop (10), and on the thick fibres (5, 7, 8).

9. A process for the production of a 4-gate optical coupler comprising an incoming, an ongoing, an input-coupling, and an output-coupling multi-mode light conducting fibre, in which the flat end faces of the four fibres, the axes of which lie in one plane, are pressed together so that their axes are offset, and in which the cross-sectional area of the input-coupling fibre is smaller than that of the other fibres, characterised in that in a plate (40) there is produced at least one groove (42) the width of which corresponds approximately to the diameter of the thick fibres and the depth of which corresponds approximately to twice the diameter of the thick fibres and approximately to the diameter of the thin fibres; that initially a plurality of thin fibres (43 to 45) and subsequently two thick fibres (46 and 47) are inserted into this groove (42), are brought into intimate contact by means of a pressure plate (48) and are fixed in this position;

that the plate (40) is divided transversely to the fibres (43 to 47), and the two end surfaces are polished flat and reconnected with the requisite axial offset.

10. A process as claimed in Claim 9, characterised in that the plate (40) consists of glass.

11. A process as claimed in Claim 9, characterised in that the plate consists of light-sensitive material and the grooves are produced photolithographically.

12. A 4-gate optical coupler having an incoming, an ongoing, an input-coupling, and an output-coupling multi-mode light conducting fibre, in which the flat end faces of the four fibres, the axes of which lie in one plane, are pressed together so that their axes are offset, and in which the cross-sectional area of the input-coupling fibre is smaller than that of the other fibres, said coupler having been produced by the process according to Claim 1, characterised in that the light-conducting fibres rest on a substrate one beside another and in mutual contact, the outermost-lying, thick fibres abutting against stops and the outermost-lying thin fibre (6) being fixed in a guide member (9).

13. A 4-gate optical coupler as claimed in Claim 12, characterised in that the substrate consists of glass.

14. A 4-gate optical coupler as claimed in Claim 12 or Claim 13, characterised in that the guide member (9) itself consists of a substrate (20) and a material (21) which is connected to the substrate (20) and is provided with guide trenches (22).

15. A 4-gate optical coupler as claimed in Claim 14, characterised in that the substrate (20) of the guide member (9) consists of glass.

16. A 4-gate optical coupler as claimed in Claim 14 or Claim 15, characterised in that the material (21), which is connected to the substrate (20), of the guide member (9) consists of silicon, or of light-sensitive material, in particular a light-sensitive synthetic resin.

17. A 4-gate optical coupler as claimed in one of Claims 12 to 16, characterised in that, for complete fixing, a cover (11) rests on the thick fibres (5, 7, 8) and on the stops (10).

18. A 4-gate optical coupler comprising an incoming, an ongoing, an input-coupling and an output-coupling multi-mode light-conducting fibre, in which the flat end faces of the four fibres, the axes of which lie in one plane, are pressed together so that their axes are offset, and in which the cross-sectional area of the input-coupling fibre is smaller than that of the other fibres, said coupler having been produced in accordance with the process claimed in Claim 7, characterised in that a groove (42) is formed in a plate (40); that thin and thick fibres are inserted into these grooves (42), and a pressure plate (48) fixes the fibres arranged in the groove (42).

19. A 4-gate optical coupler as claimed in Claim 18, characterised in that the material of the plate (40) is glass, silicon, or light-sensitive material, in particular a light-sensitive synthetic resin.

20. A 4-gate optical coupler as claimed in Claim 18 or Claim 19, characterised in that the plate (40) is connected to a substrate (41).

21. A 4-gate optical coupler as claimed in one of Claims 12 to 20, characterised in that the fibre ends remote from the two end surfaces which are connected with an offset, are fixed in guide grooves at a predetermined spacing.

## Revendications

1. Procédé pour la fabrication d'un coupleur optique à quatre portes qui comporte une fibre optique multimode d'arrivée, une fibre optique multimode de départ, une fibre optique multimode de couplage et une fibre optique multimode de découplage, dans lequel les surfaces frontales planes des quatre fibres, dont les axes se trouvent dans un plan, sont aboutées de manière que leurs axes soient décalés, et la surface de la section transversale des fibres de couplage est plus faible que celle des autres fibres, caractérisé par le fait qu'une extrémité de fibre (8) et une fibre traversante (5, 7) possédant la même surface de section transversale sont placées sur un substrat (2) contre une butée (10), que l'extrémité d'une fibre (6) possédant une surface de section transversale plus faible est amenée, dans une partie de guidage (9), au niveau de ces fibres (8 et 5, 7), et toutes les fibres sont fixées dans cette position, et que le corps de départ (1) ainsi formé est séparé transversalement par rapport aux axes des fibres, les deux surfaces frontales sont polies suivant un plan et sont de nouveau réunies avec le décalage exigé.

2. Procédé suivant la revendication 1, caractérisé par le fait que pour fabriquer la partie de guidage des tranchées de guidage (22) destinées à recevoir les fibres minces sont formées dans une plaquette (21), que la plaquette (21) est séparée parallèlement aux tranchées de guidage (22) à une certaine distance du milieu de ces tranchées, qui est légèrement plus importante que le rayon des fibres épaisses, et que par meulage la distance du milieu des tranchées (22) par rapport à la surface de meulage est réglée sur le rayon des fibres épaisses.

3. Procédé suivant la revendication 1, caractérisé par le fait que pour fabriquer la partie de guidage, des bandes (32) de quelques millimètres de large sont découpées dans une plaquette (30), et les surfaces de coupe sont meulées suivant un plan, qu'une bande (32) ainsi formée est placée contre une butée (33), qu'une ou plusieurs tranchées de guidage (34) pour des fibres minces sont formées par voie photolithographique, par l'intermédiaire d'un masque, et que les bandes sont ensuite séparées, transversalement par rapport aux tranchées, en un grand nombre de parties de guidage identiques.

4. Procédé suivant la revendication 2 ou 3, caractérisé par le fait que la plaquette (21, 20) est en silicium.

5. Procédé suivant la revendication 2 ou 3, caractérisé par le fait que la plaquette est en matériau photosensible.

6. Procédé suivant l'une des revendications 2 à 5, caractérisé par le fait que la plaquette (21, 30) se trouve sur un substrat (20) et y est couplée rigidement.

7. Procédé suivant l'une des revendications 1 à 6, caractérisé par le fait que les extrémités des fibres opposées aux deux surfaces frontales réunies avec décalage sont fixées sur le substrat (2), dans des rainures de guidage, à une distance définie.

8. Procédé suivant l'une des revendications 1 à 6, caractérisé par le fait qu'un couvercle (11) assurant la fixation complète est disposé sur deux plaquettes (3, 4) disposées sur les extrémités du substrat (2), sur la butée (10) et sur les fibres épaisses (5, 7, 8).

9. Procédé pour la fabrication d'un coupleur optique à quatre portes qui comporte une fibre optique multimode d'arrivée, une fibre optique multimode de départ, une fibre optique multimode de couplage et une fibre optique multimode de découplage, dans lequel les surfaces frontales planes des quatre fibres, dont les axes se trouvent dans un plan, sont aboutées de manière que leurs axes soient décalés, et la surface de la section transversale des fibres de couplage est plus faible que celle des autres fibres, caractérisé par le fait que dans une plaque (40) on forme au moins une rainure (42) dont la largeur correspond approximativement au diamètre des fibres épaisses et dont la profondeur correspond sensiblement à deux fois le diamètre des fibres épaisses et à une fois le diamètre des fibres minces, que tout d'abord plusieurs fibres minces (43 à 45) et ensuite deux fibres épaisses (46 et 47) sont placées dans cette rainure (42), et sont amenées en contact intime, par l'intermédiaire d'une plaquette de pression (48), et sont fixées dans cette position, et que la plaque (40) est séparée transversalement par rapport aux fibres (43 à 47), les deux surfaces frontales sont polies suivant un plan et sont de nouveau réunies avec le décalage axial exigé.

10. Procédé suivant la revendication 9, caractérisé par le fait que la plaque (40) est en verre.

11. Procédé suivant la revendication 9, caractérisé par le fait que la plaque est constituée par un matériau photosensible et que les rainures sont formées par voie photolithographique.

12. Coupleur optique à quatre portes qui comporte une fibre optique multimode d'arrivée, une fibre optique multimode de départ, une fibre optique multimode de couplage et une fibre optique multimode de découplage, dans lequel les surfaces frontales planes des quatre fibres, dont les axes se trouvent dans un plan, sont aboutées de manière que leurs axes soient décalés, et la surface de la section transversale des fibres de couplage est plus faible que celle des autres fibres, fabriqué suivant le procédé suivant la revendication 1, caractérisé par le fait que les fibres optiques sont disposées les unes à côté des autres sur un substrat en faisant contact l'une avec l'autre, les fibres épaisses qui se trouvent à l'extérieur s'appuyant sur des butées et les fibres minces (6) qui se trouvent à l'extérieur étant fixées dans une partie de guidage (9).

13. Coupleur optique à quatre portes suivant la revendication 12, caractérisé par le fait que le substrat est en verre.

14. Coupleur optique à quatre portes suivant la revendication 12 ou 13, caractérisé par le fait que la partie de guidage (9) est elle-même constituée par un substrat (20) et par un matériau (21) qui est couplé au substrat (20) et qui est muni de tranchées de guidage (22).

15. Coupleur optique à quatre portes suivant la revendication 14, caractérisé par le fait que le substrat (20) de la partie de guidage (9) est constitué par du verre.

16. Coupleur optique à quatre portes suivant la revendication 14 ou 15, caractérisé par le fait que le matériau (21) de la partie de guidage (9) qui est couplé au substrat (20) est constitué par du silicium ou un matériau photosensible, notamment une matière synthétique photosensible.

17. Coupleur optique à quatre portes suivant l'une des revendications 12 à 16, caractérisé par le fait que, pour la fixation complète, un couvercle (11) est disposé sur les fibres épaisses (5, 7, 8) et sur les butées (10).

18. Coupleur optique à quatre portes qui comporte une fibre optique multimode d'arrivée, une fibre optique multimode de départ, une fibre optique multimode de couplage et une fibre optique multimode de découplage, dans lequel les surfaces frontales des quatre fibres, dont les axes se trouvent dans un plan, sont aboutées de manière que leurs axes soient décalés, et la surface de la section transversale des fibres de couplage est plus faible que celle des autres fibres, fabriqué suivant le procédé suivant la revendication 7, caractérisé par le fait qu'une rainure (42) est ménagée dans une plaque (40), que des fibres minces et épaisses sont placées dans cette rainure (42) et qu'une plaquette de pression (48) fixe les fibres se trouvant dans la rainure (42).

19. Coupleur optique à quatre portes suivant la revendication 18, caractérisé par le fait que le matériau de la plaque (40) est constitué par du verre, du silicium ou un matériau photosensible, notamment une matière synthétique photosensible.

20. Coupleur optique à quatre portes suivant la revendication 18 ou 19, caractérisé par le fait que la plaque (40) est couplée à un substrat (41).

21. Coupleur optique à quatre portes suivant l'une des revendications 12 à 20, caractérisé par le fait que les extrémités des fibres opposées aux deux surfaces frontales réunies avec décalage sont fixées à une distance définie dans des rainures de guidage.

FIG 1

FIG 2

FIG 3

FIG 4

31

30

FIG 5

33

32    34

FIG 6

40

42

42

41

FIG 7

48

47

46

42

40

44   43   45